# EUROPEAN PATENT SPECIFICATION

(11) **EP 1 134 640 B1**
(45) Date of publication and mention of the grant of the patent: **07.11.2007**
(21) Application number: 00309213.7
(22) Date of filing: 19.10.2000
(51) Int. Cl.: G05D 1/08, B64G 1/24

(54) **Attitude control system for a spacecraft**
Lageregelung für ein Raumfahrzeug
Dispositif de commande de l'attitude d'un engin spacial

(30) Priority: 07.03.2000 GB 0005405
(43) Date of publication of application: 19.09.2001
(73) Proprietor: EADS Astrium Limited, Hertfordshire, SG1 2AS (GB)
(72) Inventor: Holt, Antony Philip, Hitchin, Hertfordshire SG5 1UF (GB)
(74) Representative: Mukherjee, Aniruddha

(56) References cited:
- US-A- 3 998 409
- US-A- 4 786 018
- US-A- 5 562 266

## Description

This invention relates to an attitude control system for a spacecraft.

In one known system, a star sensor unit is provided. This could include a CCD on which the image of a star falls to provide a fixed reference in space. Reaction wheels are provided in the spacecraft to enable reaction torques to be created on the structure of the spacecraft in one or more of three orthogonal directions, in order to make any necessary corrections in the attitude of the spacecraft. Such reaction wheels are disclosed for example in US-A-3998409, in which an attitude control system comprises gyroscopes, sun sensors, star sensors, etc., provide a fixed reference for attitude. Attitude errors are employed to calculate torque commands to be sent to each reaction wheel, for attitude compensation

There are situations in which the output of a star sensor unit can become an unreliable control signal for attitude, for example, if a spacecraft rotates too fast relative to the star which is being sensed, for example, if the spacecraft is tracking a target on the Earth. The image of the star can then move too fast over the area of the CCD to provide a reliable signal, or the image might be lost altogether.

For this reason, gyroscopes are usually carried by spacecraft in order to provide attitude control in the event of loss or unreliability of the star sensor signal. However, gyroscopes are expensive and incur a weight penalty.

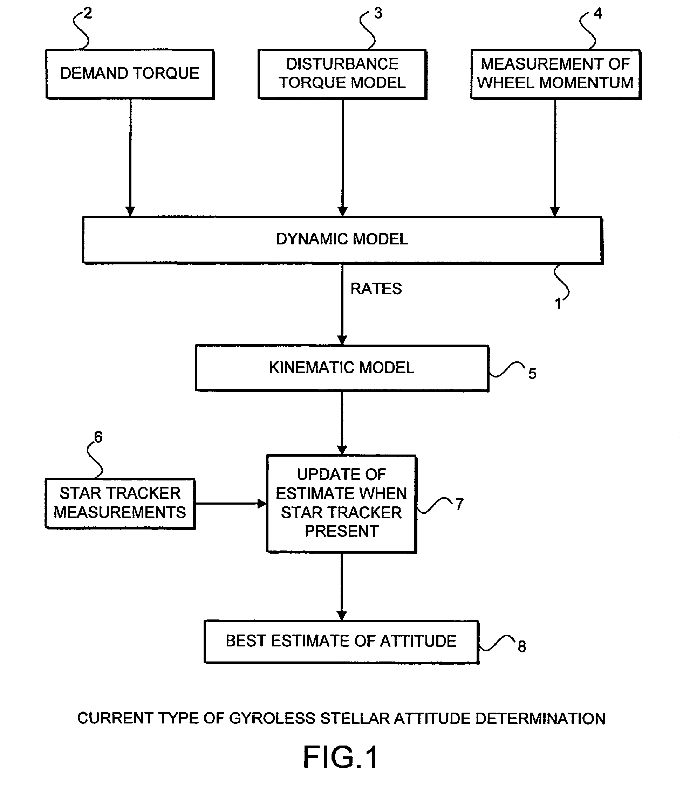

It has been proposed (Figure 1) to control the attitude, in the temporary absence of the star sensor unit, using means 1 for modelling the dynamic behaviour of the satellite. The dynamic model means 1 takes as its input the demanded torque 2 i.e. any necessary corrections to the attitude which the spacecraft has been ordered to perform, the disturbance torque acting on the spacecraft 3 i.e. the best estimate of the perturbing torque on the spacecraft based on the outputs of the reaction wheels and the last output of the star sensor unit, taking into account the flight history of the spacecraft, together with the sensed speeds 4 of the reaction wheels which acts as an input to the dynamic model means to provide an accurate value for the momentum of the reaction means itself.

The known dynamic model means 1 uses an optimal recursive data processing algorithm such as a Kalman filter to derive at its output the best estimate of the rate of rotation of the satellite about three orthogonal axes.

In turn, means 5 for modelling the kinematic behaviour of the satellite is used to estimate the attitude of the spacecraft about three orthogonal axes. This is updated by the star sensor unit 6 in a unit 7, when the star sensor measurements are available, in order to provide a best estimate of attitude, which is used in the means to generate the disturbance torque model 3.

While attempts have been made to use such a dynamic model means to control the attitude of a satellite in the absence of a signal from the sun sensor unit, it is thought that accurate control could only be provided for a very short period of time.

The reason for this is that the dynamic model means 1 performs calculations of the equations of motion of the satellite. Unfortunately, the equations of motion of the satellite in each of its orthogonal directions are coupled to the equations of motion of the satellite in its other orthogonal directions, and the equations are non-linear in themselves. The rotational speed of the spacecraft about 1 axis is gyroscopically coupled to the rate of rotation about its orthogonal axis.

The calculations performed by the dynamic model means 1 are therefore complicated, and this has the result that approximations have to be made, so that the three axis rates of rotation estimated by the dynamic model means are imperfect representations of the actual three axis rates of rotations. The same deficiency applies to the kinematic model means, in that the calculations are complicated and approximations are again used, so that the three axis attitude values estimated by the kinematic model means are likewise imperfect representations of the actual three axis rates of rotation.

The invention provides an attitude control system for a spacecraft, which includes three-axis reaction means supported by the structure of the spacecraft, and providing a reaction momentum signal value, the system being characterised by:
spacecraft structure momentum model means for providing an estimated spacecraft structure momentum signal output,
inertial momentum attitude means for providing an output signal representing inertial momentum vector attitude in response to said reaction momentum signal and said estimated spacecraft structure momentum signal,
and means for providing an estimate of spacecraft attitude from said output signal representing inertial momentum vector attitude.

The calculation of the attitude of the inertial momentum vector, in accordance with the invention, uses as an input the sensed and therefore not approximated rotational speeds of the reaction means thereby producing a better estimate of the attitude of the spacecraft than hitherto.

Ways of carrying out the invention will now be described in detail, by way of example, with reference to the accompanying drawings, in which:
Figure 1 is a block diagram of a previously proposed attitude determining means; and
Figure 2 is a block diagram of an attitude determining means according to the invention.

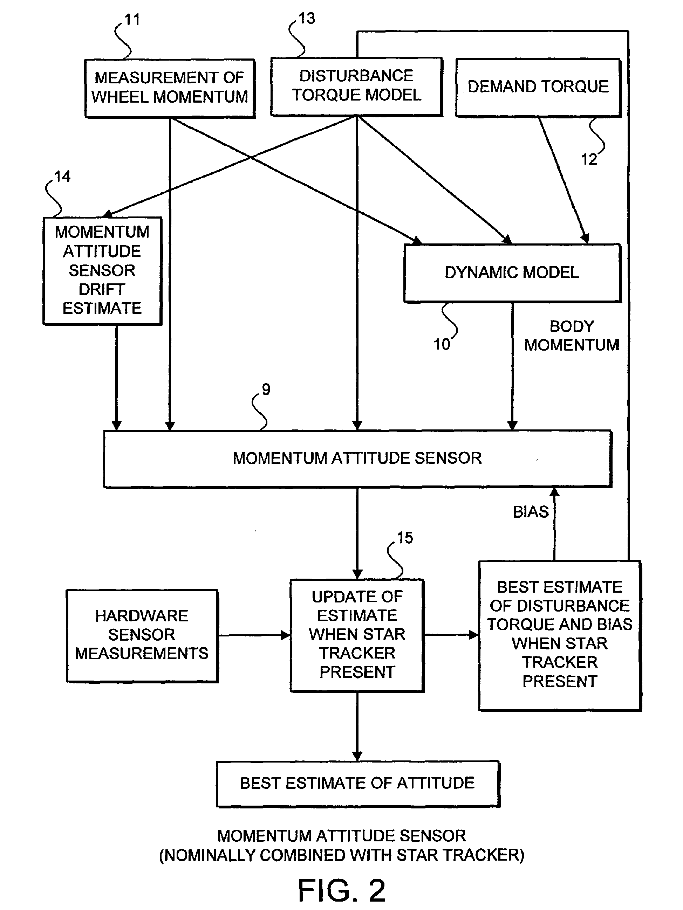

Referring to Figure 2, the calculation of the inertial momentum vector of the spacecraft including its reaction wheels is carried out in block 9, and the calculations which are performed in this unit do not entail approximations, with the result that the output would be perfect if the inputs were perfect.

The input to this unit 9 include an estimate of the momentum of the structure of the spacecraft i.e. not including the three-axis reaction means, from dynamic model means 10 and the sensed momentum of the three-axis reaction means, via unit 11.

The dynamic model means 10 operates the same as the dynamic model means 1 of Figure 1 (except that only the momentum of the spacecraft structure is being estimated). Hence its output to the calculation unit 9 includes the inaccuracies referred to above. The momentum information from unit 11, based on directly sensed velocities on the other hand, does not.

It will be noted that what is being calculated in block 9 is the attitude of the inertial momentum vector of the spacecraft, rather than the rates of rotation of the spacecraft. This calculation of the attitude of the inertial momentum vector does not involve coupled non-linear equations in the way that the calculation of the rates of rotation in the dynamic model 1 in the previously proposed system of Figure 1 did. It follows that the measurements of the momentum of the reaction means is not subject to the approximations which were employed for expediency on this date in the prior proposal of Figure 1.

As for Figure 1, the dynamic model means 10 has inputs from the torque demanded 12, the disturbance torque 13, which takes into account the difference between the torque on the spacecraft sensed by the reaction means and the calculated attitude including use of the sun sensor, together with the flight history of the spacecraft. The flight history could be anything from tens of minutes to days or even months. The dynamic model means also has an input from the sensed velocity of the reaction means 11.

The calculation of the inertial momentum vector in unit 9 also has inputs from the disturbance torque model and a unit 14 to estimate drift in the attitude of the inertial momentum vector.

The output of the unit is updated in unit 15 when the output of the sun sensor is present.

It will be seen that the problems associated with the design fall into two categories; namely, interpretation of the momentum vector from the wheel speeds, and removing the components of the momentum vector that are not attributable to body motion, i.e. that are corrupting the measurement of attitude, and ensuring that the attitude measurement is derived from the complete momentum vector.

The first of these relates to the knowledge of the physical characteristics of the wheels and their alignment within the spacecraft. The second relates mainly to the effect of the environment, external torques and orbital motion, but also relates to control action and transients e.g. during momentum management and attitude manoeuvres.

Given the need to extract a measure of attitude from information which is corrupted by other variables, random or otherwise, the approach taken is to employ the use of an optimal recursive data processing algorithm in unit 9; more specifically, a Kalman filter. This is principally to provide the best estimate of attitude regardless of the sensor information available.

The system is then one which, under nominal conditions (steady state), provides two measurements of attitude: one from the hardware sensors, e.g. an autonomous star tracker or a Sun sensor and star tracker; and one from the momentum attitude sensor. There are two approaches to the use of these two measurements:
First, the weighting of each is adjusted only on the availability of the sensor; i.e. if the star sensor or tracker or Sun sensor etc is no longer providing information it is effectively ignored by the estimator.
Second, the weighting of each is adjusted according to the availability of information and the dynamic state of the spacecraft. For example, the variance of the star tracker measurements is a function of spacecraft body rate.

In the preferred embodiment, the solution is that of a Kalman filter to provide an optimum estimation of the attitude from the information available.

A general solution requires the problem to be posed in a general form. For this purpose, the following is assumed: Firstly, three axis attitude information with respect to the frame of reference is available; that is to say by means of a sensor or set of sensors such as an autonomous star tracker, or a Sun sensor and star tracker/mapper etc. Secondly, this information is available some of the time. More specifically, there are periods when some or all of this information is not available. Thirdly, the means of attitude control is primarily by the use of reaction wheels.

In general, current and future Earth Observation missions will be dominated by a control systems which utilise autonomous star trackers (AST) as the primary sensor. It is often found that the accuracy of such AST's is not sufficient to provide the pointing accuracy required for the high performance missions such as high resolution optical/hyper-spectral imagers and SAR's.

In applications where target tracking is required, such as hyper-spectral imagers, the associated body rates are often above the capability of AST's; either they stop providing attitude information, or the noise performance becomes vastly degraded.

The methods described allow reasonably medium to high performance AST's to be used in conjunction with the momentum attitude sensor to provide a target tracking capability without the need for gyros. The star tracker noise performance with respect to body rate must be included in the filter measurement covariance matrix such that the weighting between the AST and the momentum attitude sensor provides the best estimate of the attitude during the peak of the manoeuvre.

The method described provides the mechanism for such a design, but the following points need to be taken into account. The orbital motion must be included; this will appear as a reference profile to maintain Earth pointing with respect to the inertial reference given by the AST. Hence will naturally be taken care of in the steering law. The attitude momentum sensor must include the pitch body rate of ω₀. The gravity gradient torque can be estimated for continuous nadir pointing, but an attitude dependent model must be used during the tracking manoeuvres. It may be sufficient to employ a relatively crude mode, and estimate the error during the beginning of the manoeuvre when the AST is available, and then apply this as a constant correction to the model for the momentum attitude sensor. There will always be a residual error, but this may be insignificant over the required time-scale.

The accuracy that can be achieved is a great unknown at this stage, and it may become necessary to estimate the errors associated with the wheels by augmenting the filter. Such errors directly contribute to the error in the momentum attitude sensor, and are: momentum measurement error due to wheel speed quantisation and error in the knowledge of the wheel inertia; wheel alignment knowledge.

It may be possible to run such a filter during periods when observations are not being performed, e.g. during eclipse for a hyper-spectral imaging mission.

The three-axis reaction means may consist of three orthogonal reaction wheels, but an extra redundant reaction wheel set an angle to the three could also be included, and other arrangements of reaction wheels and other rotatable bodies are of course possible.

## Claims

1. An attitude control system for a spacecraft, which includes three-axis reaction means supported by the structure of the spacecraft, and providing a reaction momentum signal value, the system being
**characterised by**:
spacecraft structure momentum model means (10) for providing an estimated spacecraft structure momentum signal output,
inertial momentum attitude means (9) for providing an output signal representing inertial momentum vector attitude in response to said reaction momentum signal and said estimated spacecraft structure momentum signal,
and means for providing an estimate of spacecraft attitude from said output signal representing inertial momentum vector attitude.

2. A system as claimed in claim 1, wherein said spacecraft body momentum model means comprises an optimal recursive data processing means.

3. A system as claimed in claim 2, wherein said optimal recursive data processing means comprises a Kalman filter.

4. A system as claimed in any preceding claim, wherein said inertial momentum vector attitude means comprises an optimal recursive data processing means.

5. A system as claimed in claim 4, wherein said optimal recursive data processing means comprises a Kalman filter.

6. A system according to any preceding claim, wherein said inertial momentum attitude means is additionally responsive to a signal representing momentum attitude drift estimate (14).

7. A system according to any preceding claim, wherein said inertial momentum attitude means is additionally responsive to a signal representing disturbance torque (13).

8. A system according to any preceding claim, wherein said means for providing an estimate of spacecraft attitude includes means (15) responsive to signals representing attitude form a star tracker.

9. A method of controlling attitude of a spacecraft, which includes three-axis reaction means supported by the structure of the spacecraft, and providing a reaction momentum signal value, the method comprising:
providing a spacecraft structure momentum model (10) estimating spacecraft structure momentum,
determining inertial momentum vector attitude (9) in response to said reaction momentum signal and the estimated spacecraft structure momentum,
and providing an estimate of spacecraft attitude from said inertial momentum vector attitude.

## Patentansprüche

1. Ein Lageregelungssystem für ein Raumfahrzeug, das ein dreiaxiales Reaktionsmittel, das von der Struktur des Raumfahrzeugs gestützt wird und das einen Signalwert des Reaktionsmoments bereitstellt, umfasst, wobei das System durch Folgendes **gekennzeichnet** ist:
Modelliermittel für das Raumfahrzeugstrukturmoment (10) zum Bereitstellen einer geschätzten Signalausgabe für das Raumfahrzeugstrukturmoment,
Trägheitsmomentlagemittel (9) zum Bereitstellen eines Ausgabesignals, das die Trägheitsmomentvektorlage als Antwort auf das Reaktionsmomentsignal und das Signal des geschätzten Raumfahrzeugstrukturmoments darstellt,
und Mittel zum Bereitstellen einer Schätzung der Fluglage des Raumfahrzeugs von dem Ausgabesignal, das die Trägheitsmomentvektorlage darstellt.

2. System gemäß Anspruch 1, wobei das Modelliermittel für das Raumfahrzeugkörpermoment ein Mittel für die optimale rekursive Datenverarbeitung beinhaltet.

3. System gemäß Anspruch 2, wobei das Mittel für die optimale rekursive Datenverarbeitung einen Kalmanfilter beinhaltet.

4. System gemäß einem der vorhergehenden Ansprüche, wobei das Trägheitsmomentvektorlagemittel ein Mittel für die optimale rekursive Datenverarbeitung beinhaltet.

5. System gemäß Anspruch 4, wobei das Mittel für die optimale rekursive Datenverarbeitung einen Kalmanfilter beinhaltet.

6. System gemäß einem der vorhergehenden Ansprüche, wobei das Trägheitsmomentlagemittel zusätzlich auf ein Signal, das eine Momentlageabdriftschätzung (14) darstellt, anspricht.

7. System gemäß einem der vorhergehenden Ansprüche, wobei das Trägheitsmomentlagemittel zusätzlich auf ein Signal, das ein Störlastdrehmoment (13) darstellt, anspricht.

8. System gemäß einem der vorhergehenden Ansprüche, wobei das Mittel zum Bereitstellen einer Schätzung der Fluglage des Raumfahrzeugs Mittel (15) umfasst, die auf Signale von einem Star Tracker, die die Fluglage darstellen, anspricht.

9. Ein Verfahren zum Steuern der Fluglage eines Raumfahrzeugs, das ein dreiaxiales Reaktionsmittel, das von der Struktur des Raumfahrzeugs gestützt wird und das einen Signalwert des Reaktionsmoments bereitstellt, umfasst, wobei das Verfahren Folgendes beinhaltet:
Bereitstellen eines Raumfahrzeugstrukturmomentmodells (10), das das Raumfahrzeugstrukturmoment schätzt,
Bestimmen der Trägheitsmomentvektorlage (9) als Antwort auf das Reaktionsmomentsignal und das geschätzte Raumfahrzeugstrukturmoment,
und Bereitstellen einer Schätzung der Fluglage des Raumfahrzeugs von der Trägheitsmomentvektorlage.

## Revendications

1. Un système de contrôle d'attitude destiné à un engin spatial, lequel inclut un moyen de réaction sur trois axes soutenu par la structure de l'engin spatial, et fournissant une valeur de signal de quantité de mouvement de réaction, le système étant **caractérisé par** :
un moyen de modélisation de quantité de mouvement de structure d'engin spatial (10) destiné à fournir un signal de sortie de quantité de mouvement de structure d'engin spatial estimée,
un moyen de calcul d'attitude de quantité de mouvement inertiel (9) destiné à fournir un signal de sortie représentant l'attitude vectorielle de quantité de mouvement inertiel en réponse audit signal de quantité de mouvement de réaction et audit signal de quantité de mouvement de structure d'engin spatial estimée,
et un moyen destiné à fournir une estimation de l'attitude d'un engin spatial à partir dudit signal de sortie représentant l'attitude vectorielle de quantité de mouvement inertiel.

2. Un système tel que revendiqué dans la revendication 1, dans lequel ledit moyen de calcul de modèle de quantité de mouvement de corps d'engin spatial comprend un moyen de traitement de données récursif optimal.

3. Un système tel que revendiqué dans la revendication 2, dans lequel ledit moyen de traitement de données récursif optimal comprend un filtre de Kalman.

4. Un système tel que revendiqué dans n'importe quelle revendication précédente, dans lequel ledit moyen de calcul d'attitude vectorielle de quantité de mouvement inertiel comprend un moyen de traitement de données récursif optimal.

5. Un système tel que revendiqué dans la revendication 4, dans lequel ledit moyen de traitement de données récursif optimal comprend un filtre de Kalman.

6. Un système selon n'importe quelle revendication précédente, dans lequel ledit moyen de calcul d'attitude de quantité de mouvement inertiel est également sensible à un signal représentant l'estimation de dérive d'attitude de quantité de mouvement (14).

7. Un système selon n'importe quelle revendication précédente, dans lequel ledit moyen de calcul d'attitude de quantité de mouvement inertiel est également sensible à un signal représentant le couple perturbateur (13).

8. Un système selon n'importe quelle revendication précédente, dans lequel ledit moyen destiné à fournir une estimation de l'attitude d'un engin spatial inclut un moyen (15) sensible à des signaux représentant l'attitude à partir d'un suiveur stellaire.

9. Une méthode de contrôle de l'attitude d'un engin spatial, laquelle inclut un moyen de réaction sur trois axes soutenu par la structure de l'engin spatial, et fournissant une valeur de signal de quantité de mouvement de réaction, la méthode comprenant :
fournir un modèle de quantité de mouvement de structure d'engin spatial (10) estimant la quantité de mouvement de structure d'engin spatial,
déterminer l'attitude vectorielle de quantité de mouvement inertiel (9) en réponse audit signal de quantité de mouvement de réaction et à la quantité de mouvement de structure d'engin spatial estimée,
et fournir une estimation d'attitude d'engin spatial à partir de ladite attitude vectorielle de quantité de mouvement inertiel.
